(19) Europäisches Patentamt
European Patent Office
Office européen des brevets

(11) **EP 3 064 937 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
**G01N 27/419** *(2006.01)* **G01N 27/417** *(2006.01)*

(21) Anmeldenummer: **15158056.0**

(22) Anmeldetag: **06.03.2015**

(54) **Betriebsverfahren für eine Breitbandlambdasonde**

OPERATING METHOD FOR A BROADBAND LAMBDA PROBE

PROCÉDÉ DE FONCTIONNEMENT D'UNE SONDE LAMBDA LARGE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.09.2016 Patentblatt 2016/36**

(73) Patentinhaber: **Elster GmbH**
**55252 Mainz-Kastel (DE)**

(72) Erfinder:
• **Leerkotte, Bernardus Johannes Maria**
**7572 Oldenzaal (NL)**

• **Kane, Gavin John**
**49076 Osnabrück (DE)**

(74) Vertreter: **Murgitroyd & Company**
**Murgitroyd House**
**165-169 Scotland Street**
**Glasgow G5 8PL (GB)**

(56) Entgegenhaltungen:
**EP-A1- 1 460 418 EP-A2- 1 202 048**
**DE-A1- 3 115 404 DE-A1-102011 089 383**
**DE-T2- 69 802 340 JP-A- 2001 165 899**
**US-A1- 2005 061 667**

**Beschreibung**

Die Erfindung betrifft ein Verfahren zum Betreiben einer Lambdasonde (λ-Sonde). Insbesondere betrifft die Erfindung ein Verfahren zum Betreiben einer Breitbandlambdasonde, welche eine Pumpzelle sowie eine Messzelle aufweist. Zwischen Messzelle und Pumpzelle ist eine Messkammer ausgebildet.

Lambdasonden sind zur Kontrolle von Abgasströmen aus Verbrennungsprozessen seit langem bekannt. Eine Lambdasonde misst die sogenannte Luftzahl oder eine sonstige Kenngröße, welche aussagekräftig für den Restsauerstoffgehalt eines Verbrennungsabgases ist. In Abhängigkeit von dem Signal der Lambdasonde wird der Verbrennungsvorgang gesteuert, um einen angestrebten Restsauerstoffgehalt im Abgas zu erzielen.

Lambdasonden gibt es in verschiedenen Bauarten, wobei heutzutage üblicherweise Sonden oder Sensoren in Planartechnik verwendet werden, die neben dem eigentlichen Sensor auch eine integrierte Heizung aufweisen. Ein Beispiel für eine Breitbandlambdasonde in Planartechnik ist in der DE 10 2006 014 892 dargestellt. Der dort beschriebene Sensor weist übereinander gelegt eine Heizelement, eine Messzelle und eine Pumpzelle auf.

Eine etwas andere Gestaltung einer Lambdasonde ist in der DE 10 2009 052 158 A1 beschrieben.

Soweit im Rahmen dieser Anmeldung auf den Aufbau einer Sonde Bezug genommen wird, wird beispielhaft auf diese Druckschriften verwiesen, die einen schichtweisen Aufbau gemäß dem Stand der Technik darstellen. Der Schichtaufbau wird im Übrigen im Weiteren als Sensor bezeichnet. Sensoren dieser genannten Gestaltungen sind mit der Erfindung verwendbar.

Das grundsätzliche Funktionsprinzip einer Breitbandlambdasonde ist allgemein bekannt und wird daher nur kurz zusammengefasst. Eine Breitbandlambdasonde weist eine Pumpzelle auf, die angrenzend zum Abgasstrom platziert wird. Neben dieser Pumpzelle und an sie angrenzend ist ein Messraum, eine Messkammer oder ein Messspalt ausgebildet. Neben dem Messspalt wiederum ist eine weitere Zelle ausgebildet, die im Rahmen dieser Anmeldung als Messzelle bezeichnet wird (es gibt auch Bezeichnungen als Nernst-Zelle oder Referenzzelle). Entsprechend ist also eine Art Schichtaufbau aus Pumpzelle, Messkammer und Messzelle gebildet. Pumpzelle und Messzelle weisen jeweils Elektroden auf, die durch einen Feststoffelektrolyt getrennt sind. Die Pumpzelle und die Messzelle werden durch eine Heizung auf eine Betriebstemperatur gebracht, beispielsweise auf eine Temperatur von etwa 800°C.

Bei dieser Temperatur sind die Feststoffelektrolyte der Pumpzelle und auch der Messzelle für Sauerstoffionen durchlässig (die Feststoffelektrolyte sind regelmäßig aus Zirkoniumdioxid gebildet). In Betrieb wird die gesamte Zelle so angesteuert, dass eine Sollspannung an der Messzelle gehalten wird, beispielsweise eine Spannung von 0,45 V. Damit dies eintritt, muss der Sauerstoffmolekülstrom der durch die Diffusionspassage(n) in den an die Messzelle angrenzenden Messraum einfließt über die Pumpzelle vom Messraum zum Abgas abtransportiert werden. Zwischen Sauerstoffmolekülstrom und Sauerstoffpartialdruck des Abgases besteht dabei eine lineare Abhängigkeit. Entsprechend wird der Pumpstrom in der Pumpzelle geregelt, damit die Spannung an der Messzelle den gewünschten Wert hält. Der sich in Folge dieser Regelung ergebende Pumpstrom ist das Sensorsignal, welches charakteristisch und aussagekräftig für den Sauerstoffgehalt im Abgasstrom ist.

Da der gesamte Verbrennungsprozess in einer Einrichtung, beispielsweise einer Heizeinrichtung (z. B. Gastherme), in Abhängigkeit von den Messwerten der Lambdasonde gesteuert wird, ist eine fehlerfreie Funktion der Lambdasonde besonders wichtig. Tritt ein Defekt in dem Sensor selbst oder den Kontaktierungen oder auch der Ansteuerung des Sensors auf, können die Signale der Lambdasonde fehlerhaft sein und zu einer fehlerhaften Regelung der Verbrennungsanlage führen. Die berechnete Luftzahl stimmt dann nicht länger mit der tatsächlich physikalisch herrschenden Luftzahl im Abgasstrom überein und es können unerwünschte und ggf. gefährliche Konzentrationen von Kohlenmonoxid oder unverbrannten Kohlenwasserstoffen ausgestoßen werden. Ist die gefahrene Luftzahl im Abgasstrom viel zu hoch, ist der Wirkungsgrad der Verbrennung dramatisch reduziert.

Da derartige Defekte insbesondere auch bei Alterungsprozessen der Lambdasonde eintreten können, ist es wünschenswert, die Fehler in einer Lambdasonde früh zu erkennen. Es ist zwar im Stand der Technik bekannt, dass aufgrund von Alterungsprozessen eine langsame Drift des Sensorsystems möglich ist und diese auch durch periodische Kalibrierung zu kompensieren ist, ein schlagartig auftretender Fehler im Sensorelement ist durch solche Maßnahmen aber nicht zu erkennen.

Aus der DE 10 2013 202 260 A1 ist ein Verfahren bekannt, bei dem die Sprungeigenschaft der Pumpzelle bei einer Luftzahl von 1 zum Abgleich der Sonde genutzt wird. In Bereichen anderer, besonders in Bereichen höherer Luftzahlen ist dieses Verfahren jedoch nicht anwendbar.

Die EP 1 460 418 A1 beschreibt ein System zur Erfassung einer Sauerstoffkonzentration um das Luft-Kraftstoff-Verhältnis eines Verbrennungsmotors zu detektieren und weist eine Erkennung von Anomalien auf.

Die US 2005/061667 A1 offenbart eine Vorrichtung zum Erfassen der Konzentration von Stickoxiden im Abgas, mit einem Fehlerdetektionsmechanismus.

Aus der DE 10 2011 089383 A1 ist ein Verfahren zur Bestimmung einer Polarisation einer Pumpzelle und/oder einer Nernstzelle einer Lambdasonde zur Diagnose der BreitbandLambdasonde bekannt.

Die DE 698 02 340 T2 beschreibt einen Gassensor mit einer Impedanzschaltung zur Selbstdiagnose von Fehlfunktionen.

In der DE 3115404 A1 werden ein Verfahren und eine Vorrichtung vorgeschlagen, die zur Überwachung und Kalibrierung von Grenzstromsonden dient.

Aufgabe der Erfindung ist es, ein Betriebsverfahren für Lambdasonden bereitzustellen, welches fehlersicherer ist als die bisher bekannten Verfahren.

Die Aufgabe wird gelöst durch ein Verfahren mit den Merkmalen des Patentanspruches 1.

Gemäß der Erfindung wird neben der herkömmlichen Messung des Pumpstroms in der Pumpzelle eine zusätzliche Vermessung von Messgrößen am Sensorelement vorgenommen. Der Sensor in seinem Aufbau wird also nicht verändert, es werden jedoch Messgrößen in die Auswertung einbezogen, die bislang nicht zur Fehlerprüfung herangezogen wurden.

Der Erfindung liegt die Erkenntnis zugrunde, dass das Sensorelement als gekoppeltes System aus mehreren elektrisch und elektrochemisch wirksamen Bausteinen betrachtet werden kann. Sowohl die Pumpzelle als auch die Messzelle sind als Nernst-Zellen zu betrachten und erzeugen eine vom Konzentrationsunterschied zwischen beiden Seiten der Zellmembran abhängige Zellspannung. Die Nernst-Zellen wirken entsprechend wie Spannungsquellen, die eine konzentrationsabhängige Spannung liefern. Außerdem können weitere Einflüsse auf den Ladungstransport durch die Zellen gemäß der Erfindung einem temperierten System als ohmsche Widerstände betrachtet werden. Es ist möglich, das Sensorsystem in Gestalt eines Ersatzschaltbildes zu quantifizieren. Erfindungsgemäß wird diese Betrachtung herangezogen, um jederzeit die ordnungsgemäße Funktion des Sensors zu verifizieren. Ändert sich nämlich das durch weitere Messgrößen im Betrieb bestimmte modellhafte Vergleichssystem des Sensors, ist von einer Veränderung der Sensoreigenschaften auszugehen. Diese Betrachtung und Quantifizierung des Vergleichssystems kann in großer Verfeinerung betrieben werden, wie unten dargestellt.

In einem ersten Schritt ist es erfindungsgemäß vorgesehen, dass die Zellanordnung des Sensorelementes als elektrochemisches System betrachtet wird und damit bei einer Fehlerprüfung ausgenutzt wird, dass mehrere Größen in diesem Gesamtsystem sich gegenseitig bedingen. Durch diese gegenseitige Abhängigkeit der Größen ist es möglich, die theoretischen Zusammenhänge als Prüfkriterium dafür zu verwenden, ob die das Sensorelement mit den elektrochemischen Zellen einen Defekt erleidet oder nicht.

Erfindungsgemäß wird neben dem Strom durch die Pumpzelle wenigstens eine weitere, also andere Messgröße an dem Sensorelement erfasst. Dabei werden zumindest die Spannung an der Pumpzelle sowie der zugehörige Pumpstrom des Sensors erfasst. Diese Spannung an der Pumpzelle kann modellhaft in Bestandteile zerlegt werden, einerseits einen Spannungsabfall an einem Widerstand und der elektrochemischen Nernst-Spannung der Pumpzelle. Gemäß dieser Betrachtung setzt sich die Spannung $U_{IP}$ also zusammen aus der Spannung eines Reihenwiderstands $U_{IP} = I_P \times R_{IP}$ und der Nernst-Spannung $D_{IPn}$. Bekanntermaßen entsteht $U_{IPn}$ durch das Verhältnis der herrschenden Sauerstoffpartialdrücke des Abgases an der Außenseite der Pumpzelle und des Sauerstoffpartialdrucks in der Messkammer an der von der Außenseite abgewandten Seite der Pumpzelle. Der Sauerstoffpartialdruck in der Messkammer hat nach dem Erreichen des Endwerts des Sauerstoffpartialdrucks an der Referenzelektrode einen festen Wert. Der Partialdruck in der Messkammer ist stark abhängig von der Sollspannung der Messzelle. Es ist im Rahmen der Erfindung möglich, eine Verringerung der Sollspannung der Messzelle vorzusehen (dies wird unten näher beschrieben). Wird die Sollspannung der Messzelle von dem Standardwert von ca. 0,45 V verringert, z.B. auf 0,27 V, so stellt sich in der Messkammer ein erheblich erhöhter (beispielsweise um den Faktor 2000) Sauerstoffpartialdruck im Vergleich zu dem Partialdruck bei der herkömmlichen Sollspannung ein. Diese Maßnahme bewirkt, dass die charakteristische Sprungeigenschaft der Pumpzellenspannung $U_{IP}$ als Zweipunkt-Lambdasonde im engen Bereich rund $\lambda=1$ stark verringert wird oder sogar völlig verschwindet. Die bei dieser erfindungsgemäßen Gestaltung mit reduzierter Sollspannung der Messzelle erzeugte Nernst-Spannung der Pumpzelle ist bei vergleichbaren Sauerstoffpartialdrücken des Abgases signifikant kleiner. Die Empfindlichkeit der Nernst-Spannung der Pumpzelle für Sauerstoffpartialdrückänderungen des Abgases

$$\left( \frac{\Delta U_{IPn}}{\Delta pO2\_abg} \right)$$

bleibt jedoch unverändert und das Signal-Rausch Verhältnis wird durch den höher gewählte Sauerstoffpartialdruck in der Messkammer signifikant höher.

Aus der Spannung an der Pumpzelle wird ein Vergleichswert berechnet, der mit einem gespeicherten Kontrollwert verglichen wird. Liegen diese Werte innerhalb einer Toleranz, wird die fehlerfreie Funktion festgestellt. Liegt jedoch eine signifikante Abweichung zwischen Vergleichswert und Kontrollwert vor, wird ein Fehler im Messsystem erkannt.

Unter gespeichertem Kontrollwert ist jeder Wert oder jede Menge von Werten zu verstehen, welche in der Steuerung des Sensors wenigstens zeitweise gespeichert ist. Dies kann insbesondere eine Wertemenge sein, die z.B. unter Kalibrierungsbedingungen oder Verbrennungsbedingungen eingelernt wurde. Es kann sich jedoch auch um Werte aus dem aktuellen Brennerbetrieb handeln, z.B. die aktuelle Luftzahl aus der herkömmlichen Sensorauswertung anhand des Pumpstroms.

In der einfachsten erfindungsgemäßen Gestaltung der Fehlerkontrolle wird als Kontrollwertmenge in einem Speicher ein Zusammenhang zwischen Pumpzellenspannung und Pumpzellenstrom abgelegt. Beispielsweise können zu jedem Pumpzellenstrom zugehörige Spannungswerte der Pumpzellenspannung gespeichert werden. In Betrieb werden die gemessenen Strom- und Spannungswerte an der Pumpzelle mit diesen gespeicherten Kontrollwerten abgeglichen. Die gespeicherten Kontrollwerte können z.B. in früheren Messungen bei Spülbedingungen und/oder Verbrennungsbedingungen erfasst und gespeichert worden sein.

Tritt ein plötzlicher Fehler auf, weicht also beispielsweise innerhalb von Minuten oder sogar Sekunden der Wertezusammenhang von Pumpzellenstrom und Pumpzellenspannung von dem gespeicherten Zusammenhang ab, so kann davon ausgegangen werden, dass ein plötzlich auftretender Defekt vorliegt. Wesentlich ist, dass im Rahmen dieser Fehlerüberprüfung zusätzlich zu dem Pumpzellenstrom auch die Pumpzellenspannung wiederholt, beispielsweise periodisch erfasst wird und zur Fehlerkontrolle des Sensorelementes herangezogen wird. Die gespeicherten Werte können über eine gleitende Mittelwertbildung an die Drift des Sensors aufgrund von Alterung angepasst werden.

Das beschriebene erfindungsgemäße Verfahren, welches zusammengehörige Werte von Pumpzellenstrom und Pumpzellenspannung mit gespeicherten Vergleichswerten verwendet, ist ein einfaches und einfach zu implementierendes Verfahren, um die Fehlersicherheit eines Sensorelementes zu erhöhen. Das beschriebene Verfahren erlaubt im Gegensatz zu den im weiteren beschriebenen Verfahren zwar nicht, die Ursache des Fehlers einzugrenzen, es erlaubt aber plötzlich auftretende Defekte frühzeitig zu erkennen und ggf. eine Anlage in einem sicheren Betrieb zu überführen, bevor es zu ungünstigen oder sogar gefährlichen Verbrennungsbedingungen kommt.

Gemäß einer Weiterbildung der Erfindung wird, wie oben bereits angedeutet, die Sollspannung der Messzelle reduziert. Üblicherweise beträgt die Sollspannung dort etwa 0,45 V. Mit dieser Sollspannung hängt der Sauerstoffpartialdruck in der Messkammer zusammen, welcher durch Verringerung der Sollspannung erhöht wird. Im Rahmen der Erfindung kann die Sollspannung auf z.B. 0,40 V, 0,30 V oder z.B. auch 0,18 V verringert werden. Dadurch wird unter anderem auch die charakteristische Sprungeigenschaft der Pumpzelle als Zweipunkt-Lambdasonde im Bereich um $\lambda$ = 1 (wie u.a. in der Offenlegungsschrift DE 10 2013 202 260 A1 beschrieben) stark verringert oder sie verschwindet. Durch den resultierenden höheren Sauerstoffpartialdruck in der Messkammer ergibt sich eine stabilere Nernst-Spannung $U_{IPn}$ (u.a. weniger Rauschen) und deshalb auch eine stabilere Pumpspannung $U_{IP}$, welche zur weiteren elektronischer Weiterverarbeitung herangezogen wird. Bei einem solchen erhöhten Sauerstoffpartialdruck in der Messkammer kann die Breitbandlambdasonde allerdings nur für Lambdawerte $\lambda > 1{,}01$ angewandt werden. Dort erlaubt sie eine Fehlerkontrolle für den Bereich höherer Luftzahlen (im Gegensatz zu der DE 10 2013 202 260 A1)

In einer Weiterbildung der Erfindung wird als Vergleichsgröße eine Vergleichs-Luftzahl $\lambda_2$ oder eine Vergleichs-Sauerstoffkonzentration $\sigma_{o2\_2}$ aus den weiteren Messgrößen bestimmt. Dazu werden mehrere Pumpzellenspannungen $U_{IP\_E}$ und $U_{IP\_L}$ bei unterschiedlichen Sauerstoffpartialdrücken erfasst. Die Vergleichsgröße $\lambda_2$ und die (herkömmlich bestimmte) Kontrollgröße $\lambda_1$ oder die Vergleichsgröße $\sigma_{o2\_2}$ und die (herkömmlich bestimmte) Kontrollgröße $\sigma_{o2\_1}$ werden verglichen, um eine fehlerfreie Funktion der Breitbandlambdasonde zu prüfen.

In dieser Gestaltung wird also anhand von weiteren Messwerten ein alternatives Berechnungsverfahren für die Luftzahl oder eine Sauerstoffkonzentration durchgeführt. Diese auf alternativem Weg berechnete Größe wird mit der auf herkömmlichem Wege bestimmten Größe verglichen. Nur wenn der herkömmlich bestimmte Wert und der aus weiteren Werten bestimmte Wert nicht mehr als um eine Toleranz voneinander abweichen, wird die ordnungsgemäße Funktion des Sensors festgestellt. Ein möglicher Weg zur Berechnung von der Vergleichs-Luftzahl $\lambda_2$ und der Vergleichs-Sauerstoffkonzentration $\sigma_{o2\_2}$ ist unten angegeben. Wesentlich ist, dass als Vergleichsgröße eine Größe bestimmt wird, die mit der auf herkömmlichem Wege aus dem Pumpstrom berechneten Kontrollgröße verglichen wird.

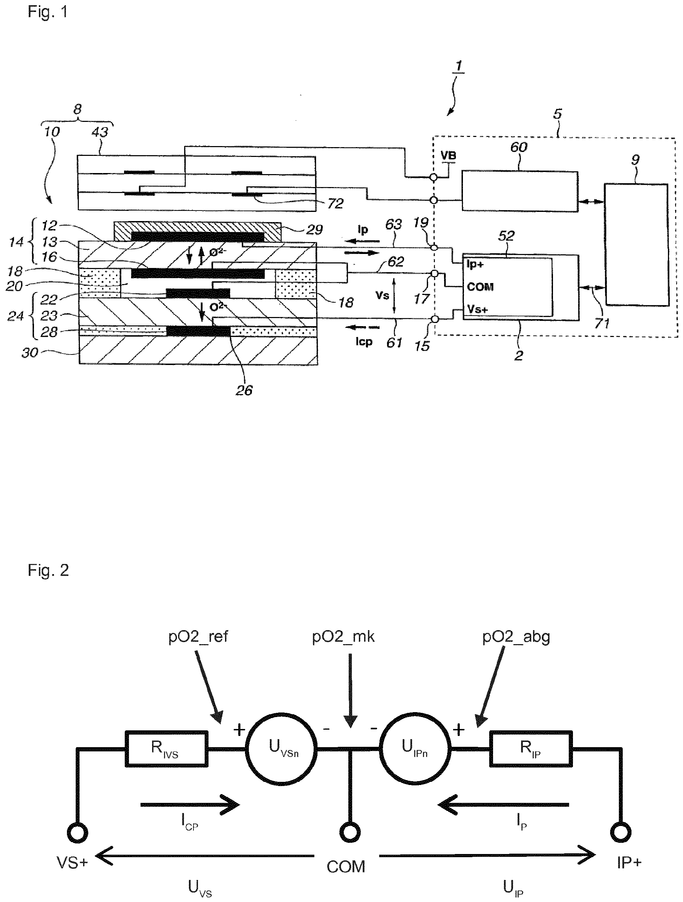

In einer Weiterbildung der Erfindung werden kennzeichnende Größen weiterer Komponenten des Sensorelementes vermessen und das System wird quantitativ umfassend bestimmt, um eine deutlich differenziertere Aussage über den Fehler in einem Sensorelement zu erhalten. Die Erfindung geht dabei davon aus, dass ein Sensorelement durch ein elektrisches Ersatzschaltbild gemäß Figur 2 zu beschreiben ist. Die Vergleichswerte werden anhand des Ersatzschaltbildes der Breitbandlambdasonde bestimmt, wobei das Ersatzschaltbild wenigstens eine Nernst-Spannungsquelle $U_{IPn}$ der Pumpzelle, eine Nernst-Spannungsquelle $U_{VSn}$ der Messzelle, einen ohmschen Widerstand $R_{IP}$ der Pumpzelle und einen ohmschen Widerstand $R_{IVS}$ der Messzelle aufweisen. Es werden wiederholt, z.B. periodisch, jeweils Werte für wenigstens eine der genannten Größen aus den Messwerten berechnet.

Die Betrachtung des Sensors als Schaltung mit wenigstens zeitweise quantifizierbaren Schaltungselementen ermöglicht es, das Sensorsystem in einer Art zweitem Betriebsmodus als Sensor zu betreiben. Bei unveränderter Bauweise des Sensors, allein durch andere Ansteuerung und Messwerterfassung wird erreicht, dass Vergleichswerte berechenbar sind, die zur Überprüfung der ordnungsgemäßen Funktion des Sensors heranzuziehen sind. Erfindungsgemäß wird davon ausgegangen, dass bei einem temperierten und im Gleichgewicht befindlichen System, also eines Sensors, der ausreichend Anlaufzeit hatte, die Ersatzschaltbildbetrachtung ein derart zutreffendes Modell liefert, dass die durch Messdaten gestützte Modellberechnung zur Fehlererkennung herangezogen werden kann. Wird nämlich festgestellt, dass eine Komponente plötzliche Veränderungen zeigt oder stimmen die Modellergebnisse nicht mehr mit den auf herkömmlichem Weg betrachteten Ergebnissen überein, deutet dies auf einen Fehler im System hin.

Der Betrachtung mit einem Ersatzschaltbild liegt zunächst die Darstellung der Nernst-Zellen als Spannungsquellen mit berechenbarer Spannung zu Grunde (siehe Figur 2). Es ist bekannt, dass die Nernst-Spannung einer Gas-Konzentrationszelle, insbesondere einer Sauerstoff-Konzentrationszelle berechenbar ist zu

$$U_{Nernst} = T \cdot \frac{R}{4 \cdot F} \cdot \ln\left(\frac{pO2\_1}{pO2\_2}\right) \; .$$

Weiterhin werden die Effekte der Elektroden, des Feststoffelektrolyten etc. auf die Stromführung in ohmschen Widerständen dargestellt. Diese Betrachtung ist gerechtfertigt, solange keine wesentlichen Temperaturschwankungen im Sensor vorliegen, die Heizung des Sensors also die Temperierung auf eine Zieltemperatur sicherstellt. Sofern das Ziel ist, als Vergleichswert einen Lambdawert auf alternative Weise zu berechnen, kann dies anhand des Ersatzschaltbildes gemäß nachfolgend beschriebenem Ansatz erfolgen.

Es werden erfindungsgemäß die Klemmenspannung $U_{IP}$ der Pumpzelle und der Pumpzellenstrom $I_P$ bei verschiedenen Sauerstoffpartialdrücken des Abgases erfasst. Zum Beispiel kann bei geringem Sauerstoffpartialdruck (kleinere Luftzahl) ein Wertepaar $U_{IP_L}$ und $I_{P_L}$ gemessen werden. Dies kann z.B. unter normalen Verbrennungsbedingungen erfolgen. $U_{IP_H}$ und $I_{P_H}$ dagegen sind gemessene Werte von $U_{IP}$ und $I_P$ bei einer höheren Luftzahl oder eine höhere Sauerstoffkonzentration, dies kann ebenfalls unter Verbrennungsbedingungen (mit höherer Luftzahl) oder bei Kalibrierung/Spülung an Luft erfolgen.

Die Modellbetrachtung des Schaltbildes erlaubt dann, aus diesen zusätzlichen Messwerten den Widerstand $R_{IP}$ im Ersatzschaltbild zu bestimmen:

$$R_{IP} = \frac{(U_{IP_H} - U_{IP_L}) + \frac{R \cdot T_{IP}}{4 \cdot F} \cdot \ln\left(\frac{I_{P_L}}{I_{P_H}}\right)}{(I_{P_H} - I_{P_L})}$$

Es wird zunächst angenommen, dass die Temperaturregelung des Sensorelements die Temperatur der Pumpzelle $T_{IP}$ auf einem gewünschten stabilen Sollwert (von z.B. 800°C) hält. Hierzu kann u.a. der temperaturabhängige Heizwiderstand des Sensors benutzt werden.

Bei bekanntem $R_{IP}$ kann die Nernst-Spannung der Pumpzelle berechnet werden:

$$U_{IPn} = U_{IP} - I_P \cdot R_{IP}$$

In diesem Zusammenhang ist jederzeit zu beachten, dass die Klemmenspannungen der Zellen nicht den Nernst-Spannungen entsprechen. Dieser Tatsache wird durch die Berücksichtigung der Widerstände Rechnung getragen.

Ist die Nernst-Spannung der Pumpzelle bekannt und wird von einem stabilen Temperatur (stabiler Wert für $R_{IP}$) ausgegangen, kann ein Vergleichswert der Luftzahl berechnet werden aus:

$$\lambda_2 = \frac{1}{1 - e^{(U_{IPn\_Abg} - U_{IPn\_Luft}) \cdot \frac{4 \cdot F}{R \cdot T_{IP}}}}$$

Dabei ist $U_{IPn\_Luft}$ der auf die vorstehend beschriebene Weise bestimmte Wert der Nernst-Spannung der Pumpzelle während Kalibrierung an Luft. Angenommen wird dabei, dass der Sauerstoffpartialdruck an der Referenzelektrode $pO2\_ref$ stabil ist und dass der Wert von $R_{IP}$ stabil ist. $U_{IPn\_Abgas}$ wird während des Verbrennungsbetriebes bestimmt. Statt der Bestimmung der Luftzahl kann auch die Sauerstoffkonzentration bestimmt werden, z.B. gemäß

$$\sigma_{O2\_2} = e^{(U_{IPn\_Abg} - U_{IPn\_Luft}) \cdot \frac{4 \cdot F}{R \cdot T_{IP}}} \cdot 20,95 [\text{Vol.} - \%]$$

Es ist erfindungsgemäß außerdem möglich, die Temperatur der Pumpzelle $T_{IP}$ unmittelbar nach einer Kalibrierung an Luft und während des darauffolgenden Brennerbetriebs oder unmittelbar nach dem Ende eines Brennerbetriebs und während der darauffolgenden Kalibrierung an Luft zu berechnen. In diesem Fall sind sowohl die Spannung

$U_{IPn\_Luft}$ für die Pumpspannung bei Luftumgebung des Sensors (oder dem Brennerbetrieb folgender Spülung) und die Spannung $U_{IPn\_Abg}$ für den Brennerbetrieb zu bestimmen. Außerdem sind die korrespondierenden Stromstärken $I_{p\_Abg}$ und $I_{p\_Luft}$ zu ermitteln.

Es gilt dann:

$$T_{IP} = \frac{4.F}{R} \cdot \frac{(U_{IPn\_Abg} - U_{IPn\_Luft})}{\ln(\frac{I_P}{I_{P\_Luft}})}$$

Wesentlich ist, dass erfindungsgemäß Vergleichswerte für Luftzahl oder Sauerstoffkonzentration anhand weiterer Messwerte (in diesem Fall verschiedenen Pumpzellenspannungen) und unter Voraussetzung einer Modellannahme bestimmt werden. In die Berechnung geht mindestens die gemessene Klemmenspannung $U_{IP}$ der Pumpzelle ein. Diese Klemmenspannung der Pumpzelle wird bei Verringerung der Sollspannung der Messzelle und einer dadurch folgenden kleineren erzeugten Nernst-Spannung der Pumpzelle signifikant kleineren Werte haben als üblicherweise in elektronischen Regelsystemen nach dem Stand der Technik gemessen werden.

Wird festgestellt, dass der auf diese Weise berechnete Vergleichswert mit dem herkömmlichen Ergebnis der Luftzahl nicht ausreichend genau übereinstimmt, so zeigt dies, dass der Sensor sich nicht mehr gemäß dem Modell (Ersatzschaltbild) verhält und ein Fehler im Sensor oder in der Ansteuerungselektronik vorliegen müsste.

Gemäß dem Ersatzschaltbild können auch weitere Vergleichsgrößen berechnet werden. Dazu können zur Integritätsprüfung gezielte Steuereingriffe an dem Sensor vorgenommen werden, um die Reaktion des Systems zu erfassen und die Bestimmung der Größen des Ersatzschaltbildes zu verfeinern.

Gemäß einer Weiterbildung der Erfindung kann der Strom durch die Messzelle, also derjenige Strom, welcher die Vergleichskonzentration des Sauerstoffs aufbaut, zeitweise verändert werden. Dazu wird der Messzellenstrom einmalig oder wiederholt, z.B. alle paar Sekunden (etwa alle 5 s) variiert, z.B. kurzzeitig abgeschaltet. Die Änderung der Signale lässt dann eine Berechnung weiterer Größen zu.

Es wird davon ausgegangen, dass die kurzzeitige Verringerung oder Abschaltung des Messzellenstroms $I_{CP}$ nur sehr geringen Einfluss auf den Referenzdruck pO2_ref hat, der an der Messzelle aufgebaut wird. Der Regelkreis hält außerdem die Messzellenspannung $U_{VS}$ auf dem vorgegebenen Referenzwert. Bei Betrachtung des Ersatzschaltbildes zeigt sich, dass bei gleichbleibendem $U_{VS}$, gleichem Referenzdruck pO2_ref und reduziertem Messzellenstrom $I_{CP}$ die Nernst-Spannung $U_{VSn}$ ansteigen muss. Dies ist gemäß Ersatzschaltbild durch Änderung des Partialdrucks in der Messkammer möglich.

Es gilt:

$$U_{VSn} = T_{VS} \cdot \frac{R}{4.F} \cdot \ln(\frac{pO2\_ref}{pO2\_mk})$$

wobei pO2_mk der Sauerstoffpartialdruck in der Messkammer ist.

Die durch die Stromreduzierung in der Messzelle hervorgerufene Änderung der Nernst-Spannung der Messzelle lautet:

$$\Delta U_{VSn} = U_{VSnL} - U_{VSnH} = T_{VS} \cdot \frac{R}{4.F} \cdot \ln(\frac{pO2\_ref}{pO2\_mk_L}) - T_{VS} \cdot \frac{R}{4.F} \cdot \ln(\frac{pO2\_ref}{pO2\_mk_H})$$

$$= T_{VS} \cdot \frac{R}{4.F} \cdot \ln(\frac{pO2\_mk_H}{pO2\_mk_L})$$

wobei $U_{VSn_L}$ die höhere Nernst-Spannung der Messzelle bei dem niedrigen Sauerstoffpartialdruck in der Messkammer pO2_mk$_L$ ist.

Für die Spannungsänderung an der Pumpzelle gilt:

$$\Delta U_{IPn} = U_{IPnL} - U_{IPnH} = T_{IP}.\frac{R}{4.F}.\ln(\frac{pO2\_abg}{pO2\_mk_L}) - T_{IP}.\frac{R}{4.F}.\ln(\frac{pO2\_abg}{pO2\_mk_H})$$

$$= T_{IP}.\frac{R}{4.F}.\ln(\frac{pO2\_mk_H}{pO2\_mk_L})$$

Daraus folgt: $\Delta U_{VSn} = \Delta U_{IPn}.\frac{T_{VS}}{T_{IP}}$ und $R_{IVS}$ kann als Vergleichswert berechnet werden zu:

$$R_{IVS} = \frac{\Delta U_{VSn}}{\Delta I_{CP}} = \frac{\Delta U_{IPn}.\frac{T_{VS}}{T_{IP}}}{\Delta I_{CP}} = \frac{\Delta U_{IPn}}{\Delta I_{CP}}.\frac{T_{VS}}{T_{IP}}$$

Weil davon ausgegangen ist das pO2_abg und deshalb $I_P$ sich nicht geändert haben ($\Delta I_P=0$) gilt:

$$R_{IVS} = \frac{\Delta U_{IPn}}{\Delta I_{CP}}.\frac{T_{VS}}{T_{IP}} = \frac{\Delta U_{IP} - \Delta I_P.R_{IP}}{\Delta I_{CP}}.\frac{T_{VS}}{T_{IP}} = \frac{\Delta U_{IP}}{\Delta I_{CP}}.\frac{T_{VS}}{T_{IP}}$$

Damit kann also der Widerstand der Messzelle bestimmt werden. In einer Näherung kann der Quotient der Temperaturen der Messzelle $T_{VS}$ und der Temperatur der Pumpzelle $T_{IP}$ zu 1 angenommen werden. Weiterhin kann berechnet werden:

$$U_{VSn} = U_{VS} - I_{CP}.R_{IVS}$$

Diese Werte können aus den weiteren erfassten Werten berechnet werden und eine Historie der Werte kann gespeichert werden, z.B. als gleitender Mittelwert. Tritt plötzlich eine Veränderung in einem der Werte auf, so deutet dies auf einen Fehler in dem Sensorsystem hin.

In einer anderen Weiterbildung der Erfindung wird die Referenzspannung $U_{REF}$ (Sollwert für die Messzellenspannung) zeitweise variiert. Zum Beispiel wird die Sollspannung um 10 mV variiert und anhand der Spannungsreaktion der Pumpzelle $U_{IP}$ und der Messzelle $U_{VS}$ auf die Änderung wird geprüft, ob ein Fehler des Sensors oder der Ansteuerungselektronik vorliegt. Insbesondere kann überprüft werden, ob das Verhältnis der jeweiligen Spannungsänderungen $\Delta U_{IP}$ und $\Delta U_{VS}$ als Vergleichswert einem gespeicherten Kontrollwert desselben Quotienten aus vorangehenden Messungen entspricht. Der gespeicherte Kontrollwert kann hier wiederum zur Berücksichtigung von langfristigen Drifteinflüssen als gleitender Mittelwert über einen längeren Zeitraum bestimmt werden.

Die Erfindung wird nun anhand der beiliegenden Zeichnungen näher erläutert.

Fig. 1 zeigt einen Sensor und schematische Ansteuerung gemäß dem Stand der Technik;
Fig. 2 zeigt ein Ersatzschaltbild einer Breitbandlambdasonde;
Fig. 3 zeigt ein Blockschaltbild einer Ansteuerschaltung zur Ausführung des erfindungsgemäßen Verfahrens gemäß einer ersten Ausführungsform;

In Fig. 1 ist eine Lambdasonde gemäß dem Stand der Technik, bekannt aus der DE 10 2009 052 158 A1 gezeigt. Für ein tiefergehendes Verständnis wird beispielhaft auf die genannte Druckschrift verwiesen, aus der an dieser Stelle Auszüge wiedergegeben werden.

Fig. 1 zeigt schematisch ein herkömmliches Steuerungssystem 1, welches eine Sensor-Steuereinheit (elektronische Steuereinheit ECU) 5 beinhaltet. Dieses Steuerungssystem 1 beinhaltet die elektronische Steuereinheit 5 und einen an einem Abgasrohr des Verbrennungsraumes befestigten Gassensor 8. Die Steuereinheit 5 beinhaltet eine Sensor-Steuerschaltung 2 zum Steuern des Gassensors 8 (Erfassungselement 10), eine Verbrennungsgerät-Steuerschaltung 9 (nachstehend als Verbrennungs-CPU 9 bezeichnet), und eine Heizvorrichtungs-Steuerschaltung 60 zum Steuern einer Heizvorrichtung (oder Heizelement) 43. Die Sensor-Steuerschaltung 2 beinhaltet eine Sensortreiberschaltung 52. Die Heizvorrichtungs-Steuerschaltung 60 regelt die Temperatur von Erfassungselement 10 auf eine Betriebstemperatur.

Der Gassensor 8 beinhaltet das Erfassungselement 10 zum Erfassen der Sauerstoffkonzentration in einem Abgasgemisch. Das Erfassungselement 10 beinhaltet eine Sauerstoff-Pumpzelle 14, eine poröse Diffusionsschicht 18 und eine Sensorzelle 24 (die weiteren Komponenten sind im Rahmen dieser Erfindung nicht wesentlich).

Die Sensortreiberschaltung 52 steuert den Gassensor 8 durch Anlegen von elektrischer Spannung am Gassensor 8 (Sauerstoff-Pumpzelle 14 und Sensorzelle 24), und erfasst ein Ausgangssignal $I_P$ von Sauerstoff-Pumpzelle 14 (Gassensorsignal). Die Sensor-Steuerschaltung 2 liefert das Gassensorsignal an die Verbrennungs-CPU 9.

Der Gassensor 8 hat, wie in Fig. 1 gezeigt, folgenden Aufbau. Die Pumpzelle 14 beinhaltet ein Festelektrolytelement 13 und erste und zweite Pumpelektroden 12 und 16, welche jeweils auf dem Festelektrolytelement 13 ausgebildet sind. Das Festelektrolytelement 13 besteht aus einem sauerstoffionenleitfähigen Festelektrolyten. In diesem Beispiel besteht das Festelektrolytelement 13 aus einem Zirkonoxid. Erste und zweite Pumpelektroden 12 und 16 bestehen aus Platin. Die erste Pumpelektrode 12 ist mit einer porösen Schutzschicht 29 überzogen, welche sie vor giftigen Substanzen schützt. Die Messzelle 24 beinhaltet ein Festelektrolytelement 23 und erste und zweite Messelektroden 22 und 28, welche jeweils auf dem Festelektrolytelement 23 gebildet sind. Das Festelektrolytelement 23 besteht ebenfalls aus sauerstoffionenleitfähigen Festelektrolyten, insbesondere Zirkonoxid.

Eine poröse Diffusionsschicht 18 trennt Pumpzelle und Messzelle und besteht aus einem isolierenden Material (wie z.B. Aluminiumoxid). Eine Messkammer 20 ist begrenzt von der porösen Diffusionsschicht 18 und Pumpzelle 14 und Messzelle 24. Diese Messkammer 20 steht mit einer Messgasatmosphäre durch die poröse Diffusionsschicht 18 in Verbindung.

Die zweite Messelektrode 28 ist zwischen einer Verstärkungsplatte 30 und dem sauerstoffionenleitfähigen Festelektrolyten 23 eingelegt und von der Außenseite abgeschirmt. Eine Referenz-Sauerstoffkammer 26 ist in Form eines Raums um die zweite Messelektrode 28 herum gebildet. Diese Referenz-Sauerstoffkammer steht über eine Diffusionspassage in Verbindung mit der Umgebungsluft des Anschlussbereichs des Sensors. Diese Diffusionspassage wirkt auf die Sauerstoffmoleküle als hoher Strömungswiderstand. Deshalb ist es durch Speisen eines geringen konstanten Stroms $I_{cp}$ möglich, Sauerstoff bei einem im wesentlichen konstanten Partialdruck in der Referenz-Sauerstoffkammer 26 zwischen Messelektrode 28 und Messelektrode 22 von Messkammer 20 zu der Messelektrode 28 aufzubauen. So wird der Sauerstoffpartialdruck in Referenz-Sauerstoffkammer 26 als ein Referenz-Sauerstoffpartialdruck beim Erfassen der eigentlichen Sauerstoffkonzentration benutzt.

Heizvorrichtung 43 besteht aus Aluminiumoxid und beinhaltet einen Heizwiderstand 72. Die Heizvorrichtung 43 wird durch eine von Heizvorrichtungs-Steuerschaltung 60 bereitgestellte elektrische Leistung gesteuert, um die Temperatur von Erfassungselement 10 auf die Ziel-Aktivierungs-Temperatur (z.B. 830°C) zu regeln.

Im Betrieb des Sensors diffundiert das Abgas durch die poröse Diffusionsschicht 18 in die Messkammer 20. Wenn die zur Verbrennung gespeiste Luft-Kraftstoff-Mischung beim stöchiometrischen Luft-Kraftstoff-Verhältnis gehalten wird, wird eine elektromotorische Kraft von 450 mV in Messzelle 24 erzeugt, da eine Sauerstoffkonzentrations-Differenz zwischen der Messkammer 20 und Referenz-Sauerstoffkammer 26 vorliegt. Bei Veränderungen im Luft-Kraftstoff-Verhältnis schwankt die Konzentration von im Abgas enthaltenem Sauerstoff, und somit wird die Sauerstoffkonzentration des Abgases in Messkammer 20 variiert. Zur Führung des Spannungswertes an der Messzelle auf den Sollwert steuert das Verbrennungs-Steuerungssystem 1 den durch die Sauerstoff-Pumpzelle 14 fließenden $I_p$-Strom mit der Sensor-Steuerschaltung 2.

Figur 2 zeigt ein im Rahmen der Erfindung herangezogenes Ersatzschaltbild des vorstehend beschriebenen Sensors, welches für die erfindungsgemäße Fehlerprüfung herangezogen wird.

In dem Ersatzschaltbild des Sensors sind die SpannungsQuellen $U_{VSn}$ und $U_{IPn}$ die als Quellen der Nernst-Spannungen dargestellt. In diesen Spannungsquellen werden Spannungen einerseits der Messzelle (VS-Zelle) und andererseits der Pumpzelle (IP-Zelle) hervorgerufen. Die Nernst-Spannungen resultieren aus den anliegenden unterschiedlichen Partialdrücken pO2_ref, pO2_mk und pO2_abg bei den herrschenden jeweiligen Zellentemperaturen $T_{VS}$ und $T_{IP}$. Unter Bezug auf Fig. 1 herrscht der Partialdruck pO2_abg im Raum um den Sensor, der Partialdruck pO2_ref herrscht an der Elektrode 26 und der Partialdruck pO2_mk liegt in der Messkammer 20 vor.

Die Reihenwiderstände $R_{IVS}$ und $R_{IP}$ sind in diesem Modell temperaturabhängige Gleichstromwiderstände der Messzelle 24 bzw. der Pumpzelle 14. Die genannten Widerstände fassen dabei verschiedene Effekte des Sensoraufbaus zusammen - nur ein Teil der Widerstände des Ersatzschaltbildes betrifft in der Realität ohmsche elektrische Widerstände. Ein großer Anteil, der in dem Modell durch die ohmschen Widerstände beschrieben wird, wird durch die Schnittstellen zwischen benachbarten Zirkoniumdioxid-Körnern (YSZ-grains) und den Intragrain-Widerstand (innerhalb der YSZ-Körner selbst) des keramischen Materials hervorgerufen. Weitere Anteile der Reihenwiderstände werden durch die Elektrolyt-Elektrodenübergänge bedingt. Der kleinste Widerstandsanteil ist dem Widerstand der Platinelektroden anzurechnen.

Ein gängiger, am Markt verfügbarer Sensor hat bei einer Heiztemperatur von 830°C für $R_{IP}$ einen Maximalwert von 260 Ω. Für die VS-Zelle gilt $R_{IVS} \leq 400$ Ω. Die Widerstandwerte werden jedoch durch Alterung des keramischen Materials ansteigen.

Während eines herkömmlichen Ablaufs einer Messung (gemäß dem Stand der Technik) von pO2_abg, wird nur der Pumpstrom $I_P$ gemessen. Aus dem Wert $I_P$ wird dann unter Rückgriff auf Kalibrierungsdaten an Luft die Sauerstoffkonzentration im Abgas berechnet.

Gemäß diesem Ausführungsbeispiel der Erfindung werden jedoch die einzelnen Bestandteile des Ersatzschaltbildes wiederholt quantifiziert, um das Auftreten eines Fehlers zeitnah zu erfassen. Dies geschieht in diesem Beispiel mit der nachfolgend beschriebenen Schaltung.

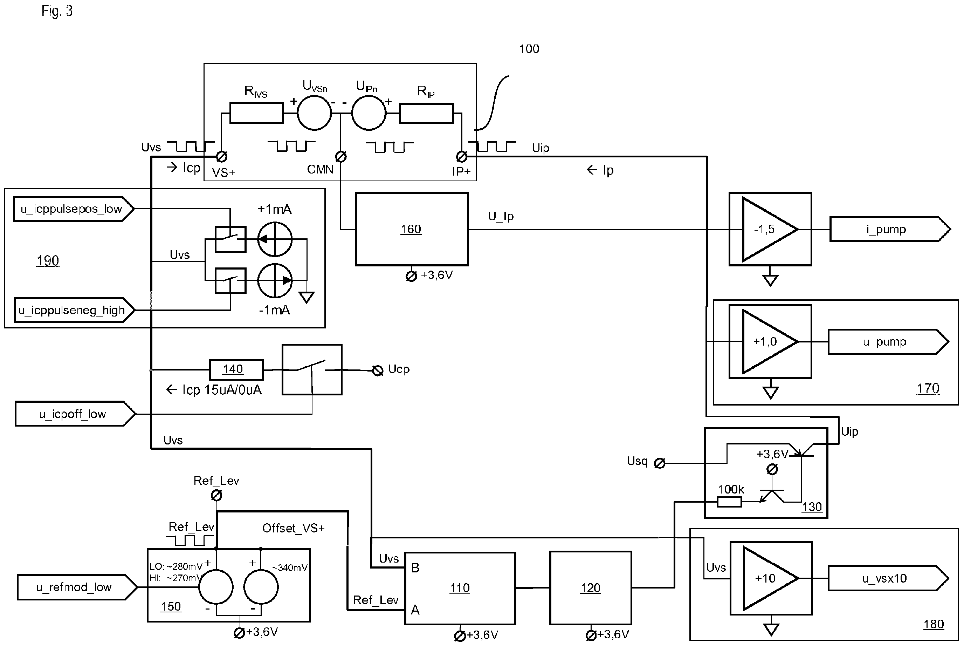

In Fig. 3 ist ein Blockschaltbild zur erfindungsgemäßen Ansteuerung eines Sensors gemäß Fig. 1 und Ersatzschaltbild 2 gezeigt. In Fig. 3 ist das Ersatzschaltbild des Sensors 100 als Teil des Systems erkennbar.

Wie bereits oben beschrieben sorgt ein Regelkreis dafür, dass der Pumpstrom $I_P$ des Sensors 100 so geregelt wird, dass $U_{VS}$ (die Spannung an der VS+ Klemme) der Referenzspannung Ref_Lev (links unten) folgt. Der Regeldifferenz Verstärker 110 speist ein verstärktes Differenzsignal von Ref_Lev und $U_{VS}$ in die PID Stufe 120. Die Ausgangsspannung der PID Stufe 120 ist negativ vorzeichenbehaftet und zieht deshalb einen kleinen Strom (fast proportional zu der Ausgangsspannung der PID Stufe) durch den Emitter-Widerstand des Eingangstransistors des Pumpstromtreibers 130. Der Eingangstransistor erzeugt mittels seines Kollektors (Stromquelle) einen Basisstrom im Treibertransistor. Der Treibertransistor erzeugt den Pumpstrom $I_P$ der durch die Pumpzelle der $O_2$-Sonde 100 fließt.

Der Pumpstrom $I_P$ wird durch den Regelkreis so eingestellt, dass der Druck in der Messkammer des $O_2$-Sensors (pO2_mk) so gehalten wird, dass die Nernst-Spannung der Messzelle addiert mit den Spannungsabfall über die Messzellenwiderstand $R_{IVS}$ auf dem Wert Ref_Lev bleibt. Der fließende Pumpstrom $I_P$ ist dabei proportional zum Sauerstoffpartialdruck im Abgas (wo sich das Sensorelement des $O_2$-Sensors befindet). Wie oben beschrieben, hat der Sensor eine innere, künstliche (gepumpte) Sauerstoffreferenz. Die Vorteile dieser Erfindung gelten selbstverständlich auch für Breitbandlambdasonden in Planartechnik, wobei die Referenzelektrode in offener Verbindung mit der Umgebungsluft des Anschlussbereichs des Sensors steht. Der Referenzraum befindet sich an der Außenseite der Messzelle (VS-Zelle). Der Sauerstoffpartialdruck an der Referenzelektrode (pO2_ref) wird durch einen kleinen Pumpstrom $I_{CP}$ durch die VS-Zelle auf einem festen Wert gehalten. Der Strom $I_{CP}$ wird über einen hochohmigen Widerstand $R_{CP}$ 140 aus einer höheren Spannung geliefert.

Der Schaltungsblock 150 erzeugt in Abhängigkeit von dem logischen Pegel des Signals u_refmod_low das Referenzsignal Ref_Lev. Dieses Referenzsignal bestimmt die Sollspannung der Messzelle wahlweise auf z.B. 0,27 V. Wie oben beschrieben sorgt diese abgesenkte Referenzspannung dafür, dass sich der Sauerstoffpartialdruck in der Messkammer signifikant höher (z.B. 2000-fach) ausbildet als bei eine herkömmliche Referenzspannung von zirka 0,45 V, was zu verbesserten Signalqualitäten von $U_{IP}$ als auch $U_{VS}$ führt. Falls der Mikrokontroller auf seinem Digitalausgang u_refmod_low eine '0' steuert, dann ist die Referenzspannung z.B. ca. 280 mV. Bei einer '1' liegt das Signal Ref_Lev etwa 10 mV niedriger. Eine dynamische Referenzspannung ist in diesem erfindungsgemäßen Beispiel wählbar, um einen 'Stuck-at-any-analog-level'-Fehler offenlegen zu können. Außerdem ist über die Sprunggröße von $U_{VS}$ (die bei einem richtig funktionierenden Regelkreis dem Signal Rev_Lev folgt) und Sprunggröße von $U_{IP}$ das Temperaturverhältnis von der Pumpzelle ($T_{IP}$) und Messzelle ($T_{VS}$) berechenbar.

Wird die Referenzspannung periodisch, z.B. alle 4-5 s geändert, werden Stuck-at Fehler innerhalb von Sekunden entdeckt, weil die Modulation des Signals Ref_Lev wegen des fehlenden Regelkreises sich nicht länger auf das Signal $U_{VS}$ auswirkt. Die Modulation von $U_{IP}$, welche erfindungsgemäß überwacht wird, verschwindet dann ebenfalls. In einem Fehlerfall, bei dem die Signale $U_{VS}$ und Ref_Lev ein Kurzschluss haben, wird der Fehler durch das Verschwinden der Modulation auf dem Signal $U_{IP}$ entdeckt.

Das Signal 'Offset_VS+' ist in diesem Beispiel eine feste Vergleichsspannung die es möglich macht, Spannungssprünge von $U_{VS}$ mit einem Faktor 100 zu verstärken (hier nicht dargestellt).

Der Strom $I_P$ der über die Klemme IP+ in die Pumpzelle 100 hineinfließt wird zusammen mit dem kleinen Strom $I_{CP}$ über Klemme CMN in den $I_P$/U-Umsetzer 160 in eine Spannung U_Ip umgesetzt. Die Klemme CMN liegt an einem virtuellen Massepunkt von 3,6 V des I/U Umsetzers. Wenn der Sauerstoffpartialdruck im Abgas (pO2_abg) größer als zirka 200 Pa ist ($\lambda > 1,01$; der Anwendungsbereich des Verfahrens dieser Erfindung), wird die Spannung $U_{IP}$ positiv (relativ zu 3,6V) sein. Diese Spannung $U_{IP}$ wird als Signal 'u_pump' bei 170 an einem AD-Wandler bereitgestellt (hier nicht gezeigt). Die Signalspannung auf 'u_pump' ist die Summe der Nernst-Spannung der IP-Zelle ($U_{IPn}$) und der Spannung über den Reihenwiderstand $R_{IP}$ des Sensors 100.

Ein weiterer Bestandteil der Schaltung betrifft einen Pulsgenerator 190 für den Pumpstrom der Messzelle zur beschleunigten Erzeugung des Sauerstoff-Referenzdrucks. Ein positiver Puls wird gegeben durch ein 0 V Signal auf 'u_icppulsepos_low'. Ein negativer Puls entsteht durch 5 V auf 'u_icppulseneg_high'.

Der $I_{CP}$ Pulsgenerator darf allerdings erst dann Pulse abgeben wenn das Sensorelement einen ausreichend hohe Temperatur erreicht hat. Ein zu frühes Pulsen würde die Messzelle durch Überspannung schädigen können.

Wenn ausschließlich $I_{CP}$ als kleiner Pumpstrom für die Erzeugung der Sauerstoffreferenz mit dem Sauerstoffpartialdruck pO2_ref benutzt wird, dauert es einige Minuten bevor ein End-Referenzdruck nach einem Neustart des Sensors erreicht worden ist. Wird jedoch erfindungsgemäß während der Kalibrierung die Pumpzellenspannung $U_{IP}$ überwacht, deutet eine abnehmende Pumpzellenspannung auf einen noch nicht vollständig ausgebildeten Referenzdruck hin. Dieses Verhalten wird genutzt um mittels der +1 mA Stromquelle in der Baugruppe 190 den Zieldruck in der Referenzkammer schnell zu erreichen. Wenn bei dem üblichen (also kleinem) Pumpstrom $I_{CP}$ ein Abfallen von $U_{IPn}$ und deshalb ein gleiches Abfallen von $U_{IP}$ wahrgenommen wird und/oder falls die gemessene Pumpspannung $U_{IP}$ höher als die zu erwartende $U_{IP}$ (aus der gespeicherte Historie) ist, kann die +1 mA Stromquelle (die in diesem Beispiel das 80-Fache von $I_{CP}$ an Strom liefert) eine bestimmte Zeit eingeschaltet werden um innerhalb von 1 bis 2 Sekunden den Endwert des Referenzdruckes einzustellen. Falls ein Anstieg von $U_{IP}$ registriert wird, kann ein Strom von ca. -1 mA kurzzeitig eingeschaltet werden.

In der gezeigten Schaltung kann außerdem mittels des Schalters 200 der Pumpstrom $I_{CP}$ für den Referenzdruck kurzzeitig (z.B. 2 Sekunden) von z.B. 15 pA auf 0 $\mu$A geschaltet werden. Hierzu wird das Signal 'u_icpoff_low' vom Mikrokontroller auf 0 V geschaltet. Diese Maßnahme dient dazu, um der Reihenwiderstand $R_{IVS}$ der VS-Zelle bestimmen zu können (siehe oben). Weil der Regelkreis dafür sorgt dass $U_{VS}$ unverändert bleibt, wird sofort nachdem $I_{CP}$ auf 0 $\mu$A gefallen ist die Nernst-Spannung der VS-Zelle ($U_{VSn}$) denselben Wert wie $U_{VS}$ haben. Dieser Anstieg von $U_{VSn}$ wird durch eine kurzzeitige Zunahme des Pumpstroms $I_P$ erreicht. Daraus folgt, dass der Sauerstoffpartialdruck in der Messkammer (p02_mk) fällt. Diese Druckänderung sorgt dafür dass die Nernst-Spannung der IP-Zelle ($U_{IPn}$) einen positiven Sprung macht der ungefähr $\Delta U_{IPn} = 0,973 \cdot \Delta U_{VSn}$ beträgt (der Faktor 0, 973 gilt z.B. wenn $T_{VS} = 830°C$ und $T_{IP} = 800°C$). Hieraus kann jetzt $R_{IVS}$ annähernd berechnet werden:

$$R_{IVS} = \frac{\Delta U_{IPn}}{0,973.\Delta I_{CP}} = \frac{\Delta U_{IP}}{0,973.\Delta I_{CP}} = \frac{3,35[mV]}{0,973.15[\mu A]} = 230[\Omega] \ .$$

Da $R_{IVS}$ regelmäßig als Kontrollwert bestimmt werden kann, (z.B. alle 10 Sekunden) ist die Nernst-Spannung der VS-Zelle ($U_{VSn}$) dauernd bekannt:

$$U_{VSn} = U_{VS} - I_{CP}.R_{IVS}$$

Die Sprunggröße $\Delta U_{IP}$ (die gleich $\Delta U_{IPn}$ ist weil $I_P$ und $R_{IP}$ unverändert angenommen werden) wird nach Weiterverarbeitung durch einen 100x Verstärker mittels AD-Wandler (nicht gezeigt) gemessen.

Nachdem die grundsätzliche Funktion des Sensors und der prinzipielle Aufbau einer Schaltung zur Durchführung des Verfahrens vorgestellt wurde, wird nun das Vorgehen gemäß einer Ausführungsform des erfindungsgemäßen Verfahrens beschrieben.

Auch im Rahmen der Erfindung kann die Lambdasonde im klassischen Messbetrieb zur Bestimmung einer Luftzahl betrieben werden. Durch den Eintritt von Sauerstoff aus dem Abgas durch die Diffusionspassage der Messkammer ist der Pumpstrom $I_P$ linear abhängig von dem Sauerstoffpartialdruck des Abgases (pO2_abg).

Dies ist der Zusammenhang, der in der Automobilindustrie und der bekannten Brennertechnik angewandt wird. Mittels periodischer Kalibrierungen an Luft wird festgelegt, wie groß $I_P$ bei einer Sauerstoffkonzentration von 20,95 Vol.%($O_2$) ist ($I_{P\_Luft}$=$I_P$@20, 95%). Der Partialdruck des Sauerstoffs ist linear abhängig von dem atmosphärischen Druck und liegt auf Meeresebene bei etwa 21 kPa. Das gewünschte Lambda kann durch die Brennerregelung einfach eingestellt werden:

$$I_P = \frac{\lambda - 1}{\lambda}.I_{P\_Luft} \rightarrow \lambda = \frac{I_{P\_Luft}}{I_{P\_Luft} - I_P}$$

Die so berechnete Luftzahl ist im Rahmen dieser Ausführungsform eine Kontrollgröße für die ordnungsgemäße Funktion des Sensors. Ein weiterer Wert für die Luftzahl wird erfindungsgemäß über weitere Messgrößen, also andere Messgrößen als alleine den Pumpstrom, hergeleitet.

Die Nernst-Spannung $U_{IPn}$ (zu unterscheiden von der Klemmenspannung $U_{IP}$) der Pumpzelle ist:

$$U_{IPn} = U_{IP} - I_P.R_{IP}$$

$R_{IP}$ wird kann wahlweise nach jedem Brennerstart, der nach eine Vorspülung mit Luft folgt und/oder jedem Brennerstopp (dem eine Nachspülung mit Luft folgt) bestimmt werden:

$$R_{IP} = \frac{(U_{IP_H} - U_{IP_L}) + \frac{R.T}{4.F}.\ln(\frac{I_{P_L}}{I_{P_H}})}{(I_{P_H} - I_{P_L})}$$

wobei die Suffixe H und L die Zustände High (Brenner ausgeschaltet unter Kalibrierungsbedingungen oder Brenner eingeschaltet bei einem höheren Sauerstoffpartialdruck des Abgases) und Low (Brenner angeschaltet bei einem niedrigeren Sauerstoffpartialdruck des Abgases) bezeichnen. In der praktischen Umsetzung kann der logarithmische Term z.B. über eine Lookup-Tabelle zu einem gemessenen Pumpstrom $I_{PL}$ bestimmt werden. Der Reihenwiderstand $R_{IP}$ der IP-Zelle ist dank der Temperaturregelung als konstant anzunehmen.

Bei jeder Kalibrierung wird ein Strom $I_P$@20, 95% gespeichert. Auch wenn die Eigenschaften des Sensors sich nicht geändert haben, wird ggf. jedes Mal ein etwas anderer $I_P$-Wert erfasst. Die Ursache liegt in der Abhängigkeit des Partialdrucks des Sauerstoffs vom variierenden atmosphärischen Druck.

Für die Berechnung des Vergleichswertes einer Luftzahl gilt sowohl $I_P = \frac{\lambda - 1}{\lambda}.I_{P\_Luft}$ als auch

$$pO2\_abg = \frac{\lambda - 1}{\lambda}.pO2\_Luft$$

Weiterhin gilt:

$$U_{IPn} = U_{IP} - I_P.R_{IP} \quad und \ (wie \ oben) \quad R_{IP} = \frac{(U_{IP_H} - U_{IP_L}) + \frac{R.T}{4.F}\ln(\frac{I_{P_L}}{I_{P_H}})}{(I_{P_H} - I_{P_L})}$$

Bei Luft im Brennraum gilt:

$$U_{IPn\_Luft} = \frac{R.T_{IP}}{4.F}\ln\frac{pO2\_Luft}{pO2\_mk} = \frac{R.T_{IP}}{4.F}\ln(pO2\_Luft) - \frac{R.T_{IP}}{4.F}\ln(pO2\_mk)$$

Bei Abgas im Brennraum gilt:

$$U_{IPn\_Abg} = \frac{R.T_{IP}}{4.F}\ln\frac{pO2\_abg}{pO2\_mk} = \frac{R.T_{IP}}{4.F}\ln(pO2\_abg) - \frac{R.T_{IP}}{4.F}\ln(pO2\_mk)$$

Durch Eliminieren von $\frac{R.T_{IP}}{4.F}\ln(pO2\_mk)$ folgt:

$$U_{IPn\_Luft} - \frac{R.T_{IP}}{4.F}\ln(pO2\_Luft) = U_{IPn\_Abg} - \frac{R.T_{IP}}{4.F}\ln(pO2\_abg)$$

und

$$pO2\_abg = pO2\_Luft \cdot e^{(U_{IPn\_Abg} - U_{IPn\_Luft}) \cdot \frac{4.F}{R.T_{IP}}}$$

Weil bekanntermaßen gilt

$$\frac{pO2\_abg}{pO2\_Luft} = \frac{I_P}{I_{P\_Luft}} \quad \text{und} \quad \lambda = \frac{I_{P\_Luft}}{I_{P\_Luft} - I_P}$$

folgt schließlich

$$\lambda = \frac{pO2\_Luft}{pO2\_Luft - pO2\_Luft \cdot e^{(U_{IPn\_Abg} - U_{IPn\_Luft}) \cdot \frac{4.F}{R.T_{IP}}}} = \frac{1}{1 - e^{(U_{IPn\_Abg} - U_{IPn\_Luft}) \cdot \frac{4.F}{R.T_{IP}}}}$$

Diese zweite Berechnungsmethode für die Vergleichsgröße der Luftzahl beruht auf dem Sensormodell, welches in Figur 2 dargestellt ist und eignet sich, mit der auf herkömmlichem Wege berechneten Luftzahl verglichen zu werden. Die benötigten Nernst-Spannungen sind nämlich unter Verwendung der Pumpzellenspannungen bei unterschiedlichen Betriebsbedingungen oder bei Kalibrierung zu bestimmen. In die Vergleichsluftzahl finden also andere Messwerte Eingang als in die herkömmliche Auswertung. Die Abhängigkeiten sind aus einem Modell eines funktionstüchtigen Sensor hergeleitet und nur wenn beide Wege zur Luftzahlbestimmung zu demselben Ergebnis führen (innerhalb vorzugebender Toleranzen) zeigt dies ein fehlerfreies Arbeiten des Sensors. Es wird in diesem Ausführungsbeispiel nämlich verifiziert, dass das Modell des funktionstüchtigen Sensors weiterhin zutrifft. Zeigt die Modellberechnung aber, dass das Modell nicht länger zutrifft, liegt mit hoher Wahrscheinlichkeit ein Defekt im Sensor oder in der Ansteuerungselektronik vor.

**Patentansprüche**

1. Verfahren zum Betreiben einer Breitbandlambdasonde in einem Abgasstrom,
wobei die Breitbandlambdasonde eine elektrochemische Pumpzelle und eine elektrochemische Messzelle mit jeweils zugeordneten Zellenelektroden aufweist, wobei zwischen Pumpzelle und Messzelle eine Messkammer ausgebildet ist,
wobei ein durch die Pumpzelle fließender Strom $I_P$ wenigstens zeitweise in Abhängigkeit von der Differenz zwischen einer erfassten Spannung Uvs an den Zellenelektroden der Messzelle und einer Referenzspannung $U_{REF}$ geregelt wird, wobei aus dem durch die Pumpzelle fließenden Strom eine Luftzahl $\lambda_1$ oder eine Sauerstoffkonzentration $\sigma_{o2\_1}$ für den Abgasstrom ermittelt wird,
wobei wiederholt eine fehlerfreie Funktion der Breitbandlambdasonde anhand von weiteren, an der Breitbandlambdasonde erfassten Messgrößen geprüft wird, wobei als weitere Messgröße wenigstens die Spannung $U_{IP}$ der Pumpzelle erfasst wird, **dadurch gekennzeichnet, dass** während des Betriebs der Pumpzelle zu unterschiedlichen Luftzahlen Wertepaare von $U_{IP}$ und zugehörigem $I_P$ erfasst werden, wobei für jedes Wertepaar wenigstens eine erste Vergleichsgröße aus $U_{IP}$ abgeleitet wird, wobei dann ein Fehler festgestellt wird, wenn die erste Vergleichsgröße von einer gespeicherten Kontrollgröße, die in Abhängigkeit von $I_p$ ermittelt wird, um mehr als einen vorgegebenen Toleranzwert abweicht.

2. Verfahren nach Anspruch 1, wobei als Kontrollgröße eine Menge von Wertepaaren von $U_{IP}$ und zugehörigem $I_p$ gespeichert werden und im Betrieb des Sensors als Vergleichsgröße aktuelle Wertepaare $U_{IP}$ und zugehörige $I_p$ erfasst werden.

3. Verfahren nach Anspruch 1, wobei als Vergleichsgröße jeweils eine Luftzahl $\lambda_2$ oder eine Sauerstoffkonzentration $\sigma_{o2\_2}$ aus den weiteren Messgrößen bestimmt wird, wobei mehrere Pumpzellenspannungen $U_{IPH}$ und $U_{IPL}$ bei unterschiedlichen SauerstoffPartialdrücken erfasst werden,
wobei die Vergleichsgröße $\lambda_2$ und die Kontrollgröße $\lambda_1$ oder die Vergleichsgröße $\sigma_{o2\_2}$ und die Kontrollgröße $\sigma_{o2\_1}$ verglichen werden, um eine fehlerfreie Funktion der Breitbandlambdasonde zu prüfen.

4. Verfahren nach Anspruch 1 oder 3, wobei die Vergleichswerte anhand einem Ersatzschaltbild der Breitbandlambdasonde bestimmt werden, wobei das Ersatzschaltbild wenigstens eine Nernst-Spannungsquelle $U_{IPn}$ der Pumpzelle, eine Nernst-Spannungsquelle $U_{VSn}$ der Messzelle, einen ohmschen Widerstand $R_IP$ der Pumpzelle und einen ohmschen Widerstand $R_{IVS}$ der Messzelle aufweist, wobei wiederholt jeweils Werte für wenigstens eine der genannten Größen aus den Messwerten berechnet werden.

5. Verfahren nach Anspruch 4, wobei der Widerstand $R_{IP}$ der Pumpzelle berechnet wird gemäß

$$R_{IP} = \frac{\left(U_{IP_H} - U_{IP_L}\right) + \frac{R.T}{4.F}.\ln\left(\frac{I_{P_L}}{I_{P_H}}\right)}{\left(I_{P_H} - I_{P_L}\right)},$$

, wobei $U_{IPL}$ die Pumpzellenspannung bei einer ersten Luftzahl ist und $I_{PL}$ der Pumpzellenstrom bei der ersten Luftzahl ist und wobei $U_{IPH}$ die Pumpzellenspannung bei einer zweiten, höheren Luftzahl ist und $I_{PH}$ der Pumpzellenstrom bei der zweiten, höheren Luftzahl ist.

6. Verfahren nach Anspruch 5, wobei die Nernst-Spannung $U_{IPn}$ berechnet wird gemäß $U_{IPn} = U_{IP}-I_P \cdot R_{IP}$.

7. Verfahren nach Anspruch 6, wobei eine Nernst-Spannung $U_{IPn\_Luft}$ bei einer Kalibrierungsmessung mit dem Sensorelement an Luft bestimmt wird, und wobei eine Nernst-Spannung $U_{IPn\_Abg}$ bei einer Messung im Abgasbetrieb bestimmt wird und wobei als Vergleichswert $\lambda_2$ bei einer Temperatur $T_{IP}$ der Pumpzelle berechnet wird zu

$$\lambda_2 = \frac{1}{1-e^{\left(U_{IPn\_Abg} - U_{IPn\_Luft}\right) \cdot \frac{4.F}{R.T_{IP}}}}$$

8. Verfahren nach Anspruch 6, wobei eine Nernst-Spannung $U_{IPn\_Luft}$ bei einer Kalibrierungsmessung mit dem Sensorelement an Luft bestimmt wird, und wobei eine Nernst-Spannung $U_{IPn\_Abg}$ bei einer Messung im Abgasbetrieb bestimmt wird und wobei als Vergleichswert $\sigma_{O2\_2}$ bei einer Temperatur $T_{IP}$ der Pumpzelle berechnet wird zu

$$\sigma_{O2\_2} = e^{\left(U_{IPn\_Abg} - U_{IPn\_Luft}\right) \cdot \frac{4.F}{R.T_{IP}}}.20{,}95[\text{Vol.}-\%]$$

9. Verfahren nach einem der vorangehenden Ansprüche, wobei periodisch die Referenzspannung $U_{REF}$ verändert wird und die resultierenden Änderungen der Pumpzellenspannung $\Delta U_{IP}$ und der Messzellenspannung $\Delta U_s$ erfasst werden.

10. Verfahren nach einem der vorangehenden Ansprüche, wobei periodisch der Strom $I_{CP}$ durch die Messzelle um einen Wert $\Delta I_{CP}$ verändert wird und die resultierenden Änderung der Pumpzellenspannung $\Delta U_{IP}$, erfasst wird.

11. Verfahren nach einem der vorangehenden Ansprüche, wobei die Referenzspannung $U_{REF}$ auf einen Wert von $U_{REF}$<0,45 V eingestellt wird, insbesondere $U_{REF}$<0,35 V, um den Sauerstoffpartialdruck in der Messkammer zu erhöhen.

12. Verfahren nach einem der vorangehenden Ansprüche, wobei das Verfahren bei Luftzahlen im Abgasstrom von $\lambda$>1,01, insbesondere bei $\lambda$>11 durchgeführt wird.

13. Verfahren nach einem der vorangehenden Ansprüche, wobei die Temperatur der Pumpzelle $T_{IP}$ unmittelbar nach einer Kalibrierung an Luft und während des darauffolgenden Brennerbetriebs oder unmittelbar nach dem Ende eines Brennerbetriebs und während der darauffolgenden Kalibrierung an Luft berechnet wird gemäß

$$T_{IP} = \frac{4.F}{R} \cdot \frac{\left(U_{IPn\_Abg} - U_{IPn\_Luft}\right)}{\ln\left(\frac{I_P}{I_{P\_Luft}}\right)}$$

## Claims

1. A method for operating a broadband lambda probe in an exhaust gas stream,
   wherein the broadband lambda probe has an electrochemical pump cell and an electrochemical measurement cell, each with assigned cell electrodes,
   wherein a measuring chamber is formed between the pump cell and the measurement cell,

wherein a current flowing through the pump cell is controlled at least intermittently as a function of the difference between a detected voltage $U_{vs}$ at the cell electrodes of the measurement cell and a reference voltage $U_{REF}$, wherein an air ratio $\lambda_1$ or an oxygen concentration $\sigma_{o2\_1}$ for the exhaust gas stream is determined from the current flowing through the pump cell,

wherein error-free functioning of the broadband lambda probe is repeatedly checked using further measurement variables detected at the broadband lambda probe, wherein at least the voltage $U_{IP}$ of the pump cell is detected as a further measurement variable, **characterised in that**,

during operation of the pump cell at different air ratios, value pairs of $U_{IP}$ and associated $I_P$ are detected, wherein at least one first comparison variable is derived from $U_{IP}$ for each value pair, wherein an error is identified when the first comparison variable deviates by more than a predetermined tolerance value from a stored control variable, which is determined as a function of $I_P$.

2. The method according to Claim 1, wherein a quantity of value pairs of $U_{IP}$ and associated $I_P$ are stored as a control variable and current value pairs $U_{IP}$ and associated $I_P$ are detected as a comparison variable during operation of the sensor.

3. The method according to Claim 1, wherein in each case an air ratio $\lambda_2$ or an oxygen concentration $\sigma_{o2\_2}$ is determined from the further measurement variables as a comparison variable, wherein several pump cell voltages $U_{IP_H}$ and $U_{IP_L}$ are detected at different oxygen partial pressures,

wherein the comparison variable $\lambda_2$ and the control variable $\lambda_1$ or the comparison variable $\sigma_{o2\_2}$ and the control variable $\sigma_{o2\_1}$ are compared, in order to check error-free functioning of the broadband lambda probe.

4. The method according to Claim 1 or 3, wherein the comparison values are determined using an equivalent circuit diagram of the broadband lambda probe, wherein the equivalent circuit diagram has at least a Nernst voltage source $U_{IPn}$ of the pump cell, a Nernst voltage source $U_{VSn}$ of the measurement cell, an ohmic resistance $R_{IP}$ of the pump cell and an ohmic resistance $R_{IVS}$ of the measurement cell, wherein, in each case, values for at least one of the mentioned variables are repeatedly calculated from the measurement values.

5. The method according to Claim 4, wherein the resistance $R_{IP}$ of the pump cell is calculated in accordance with

$$R_{IP} = \frac{\left(U_{IP_H} - U_{IP_L}\right) + \frac{R.T}{4.F}.1n\left(\frac{I_{P_L}}{I_{P_H}}\right)}{\left(I_{P_H} - I_{P_L}\right)},$$ wherein $U_{IP_L}$ is the pump cell voltage at a first air ratio and $I_{P_L}$ is the pump cell current at the first air ratio and wherein $U_{IP_H}$ is the pump cell voltage at a second, higher air ratio and $I_{P_H}$ is the pump cell current at the second, higher air ratio.

6. The method according to Claim 5, wherein the Nernst voltage $U_{IPn}$ is calculated in accordance with $U_{IPn} = U_{IP} - I_P.R_{IP}$.

7. The method according to Claim 6, wherein a Nernst voltage $U_{IPn\_Luft}$ is determined during a calibration measurement with the sensor element in air, and wherein a Nernst voltage $U_{IPn\_Abg}$ is determined during a measurement in exhaust gas operation and wherein the comparison value $\lambda_2$, at a pump cell temperature $T_{IP}$, is calculated in accordance

with $\lambda_2 = \dfrac{1}{1 - e^{\left(U_{IPn\_Abg} - U_{IPn\_Luft}\right).\frac{4.F}{R.T_{IP}}}}$ .

8. The method according to Claim 6, wherein a Nernst voltage $U_{IPn\_Luft}$ is determined during a calibration measurement with the sensor element in air, and wherein a Nernst voltage $U_{IPn\_Abg}$ is determined during a measurement in exhaust gas operation and wherein the comparison value $\sigma_{o2\_2}$, at a pump cell temperature $T_{IP}$, is calculated in accordance with

$$\sigma_{O2\_2} = e^{\left(U_{IPn\_Abg} - U_{IPn\_Luft}\right).\frac{4.F}{R.T_{IP}}}.20,95[Vol.-\%]$$

9. The method according to any one of the preceding claims, wherein the reference voltage $U_{REF}$ is periodically changed and the resulting changes of the pump cell voltage $\Delta U_{IP}$ and of the measurement cell voltage $\Delta U_{VS}$ are detected.

10. The method according to any one of the preceding claims, wherein the current $I_{CP}$ through the measurement cell is periodically changed by a value $\Delta I_{CP}$ and the resulting change of the pump cell voltage $\Delta U_{IP}$ is detected.

11. The method according to any one of the preceding claims, wherein the reference voltage $U_{REF}$ is adjusted to a value of $U_{REF} < 0.45\,V$, in particular $U_{REF} < 0.35\,V$, in order to increase the oxygen partial pressure in the measuring chamber.

12. The method according to any one of the preceding claims, wherein the method is carried out at air ratios in the exhaust gas stream of $\lambda > 1.01$, in particular at $\lambda > 1.1$.

13. The method according to any one of the preceding claims, wherein the temperature of the pump cell $T_{IP}$ is calculated in accordance with $$T_{IP} = \frac{4.F}{R} \cdot \frac{(U_{IPn\_Abg} - U_{IPn\_Luft})}{\ln\left(\frac{I_P}{I_{P\_Luft}}\right)}$$ immediately after a calibration in air and during the following burner operation or immediately after the end of a burner operation and during the following calibration in air.

## Revendications

1. Procédé de fonctionnement d'une sonde lambda large bande dans un courant de gaz d'échappement, dans lequel la sonde lambda large bande comprend une cellule de pompage électrochimique et une cellule de mesure électrochimique avec des électrodes de cellule respectivement associées, dans lequel une chambre de mesure est constituée entre la cellule de pompage et la cellule de mesure, dans lequel un courant circulant à travers la cellule de pompage est régulé au moins temporairement en fonction de la différence entre une tension détectée Uvs au niveau des électrodes de cellule de la cellule de mesure et une tension de référence $U_{REF}$, dans lequel un coefficient d'air $\lambda_1$ ou une concentration en oxygène $\sigma_{o2\_1}$ pour le courant de gaz d'échappement est déterminé(e) à partir du courant circulant à travers la cellule de pompage, dans lequel, à plusieurs reprises, une fonction sans erreur de la sonde lambda large bande est examinée à l'aide d'autres grandeurs de mesure détectées au niveau de la sonde lambda large bande, dans lequel au moins la tension $U_{IP}$ de la cellule de pompage est détectée en tant qu'autre grandeur de mesure, **caractérisé en ce que**, pendant le fonctionnement de la cellule de pompage avec différents coefficients d'air, des paires de valeurs de $U_{IP}$ et de $I_P$ correspondant sont détectées, dans lequel pour chaque paire de valeurs au moins une première grandeur de comparaison est déduite de $U_{IP}$, dans lequel ensuite une erreur est constatée lorsque la première grandeur de comparaison s'écarte, de plus d'une valeur de tolérance prédéfinie, d'une grandeur de contrôle mémorisée qui est déterminée en fonction de $I_P$.

2. Procédé selon la revendication 1, dans lequel, en tant que grandeur de contrôle, une quantité de paires de valeurs de $U_{IP}$ et de $I_P$ correspondant sont mémorisées et, lors du fonctionnement du capteur, en tant que grandeur de comparaison, des paires de valeurs actuelles $U_{IP}$ et $I_P$ correspondant sont détectées.

3. Procédé selon la revendication 1, dans lequel, en tant que grandeur de comparaison, respectivement un coefficient d'air $\lambda_2$ ou une concentration en oxygène $\sigma_{o2\_2}$ est établi(e) à partir des autres grandeurs de mesure, dans lequel plusieurs tensions de cellule de pompage $U_{IP_H}$ et $U_{IP_L}$ sont détectées à différentes pressions partielles d'oxygène, dans lequel la grandeur de comparaison $\lambda_2$ et la grandeur de contrôle $\lambda_1$ ou la grandeur de comparaison $\sigma_{o2\_2}$ et la grandeur de contrôle $\sigma_{o2\_1}$ sont comparées afin d'examiner une fonction sans erreur de la sonde lambda large bande.

4. Procédé selon la revendication 1 ou la revendication 3, dans lequel les valeurs de comparaison sont établies à l'aide d'un schéma d'équivalence de la sonde lambda large bande, dans lequel le schéma d'équivalence comprend au moins une source de tension de Nernst $U_{IPn}$ de la cellule de pompage, une source de tension de Nernst $U_{VSn}$ de la cellule de mesure, une résistance ohmique $R_{IP}$ de la cellule de pompage et une résistance ohmique $R_{IVS}$ de la cellule de mesure, dans lequel, à plusieurs reprises, respectivement des valeurs pour au moins l'une des grandeurs citées sont calculées à partir des valeurs de mesure.

**5.** Procédé selon la revendication 4, dans lequel la résistance $R_{IP}$ de la cellule de pompage est calculée selon

$$R_{IP} = \frac{(U_{IP_H} - U_{IP_L}) + \frac{R.T}{4.F} \cdot 1n\left(\frac{I_{P_L}}{I_{P_H}}\right)}{(I_{P_H} - I_{P_L})},$$ dans lequel $U_{IP_L}$ est la tension de cellule de pompage à un premier coefficient d'air et $I_{P_L}$ est le courant de cellule de pompage au premier coefficient d'air et dans lequel $U_{IP_H}$ est la tension de cellule de pompage à un deuxième coefficient d'air plus élevé et $I_{P_H}$ est le courant de cellule de pompage au deuxième coefficient d'air plus élevé.

**6.** Procédé selon la revendication 5, dans lequel la tension de Nernst $U_{IPn}$ est calculée selon $U_{IPn} = U_{IP} - I_P.R_{IP}$.

**7.** Procédé selon la revendication 6, dans lequel une tension de Nernst $U_{IPn\_Luft}$ est établie lors d'une mesure d'étalonnage avec l'élément capteur à l'air, et dans lequel une tension de Nernst $U_{IPn\_Abg}$ est établie lors d'une mesure en fonctionnement de gaz d'échappement et dans lequel, en tant que valeur de comparaison, $\lambda_2$ est calculé à une température $T_{IP}$ de la cellule de pompage selon

$$\lambda_2 = \frac{1}{1 - e^{\left(U_{IPn\_Abg} - U_{IPn\_Luft}\right) \cdot \frac{4.F}{R.T_{IP}}}}$$

**8.** Procédé selon la revendication 6, dans lequel une tension de Nernst $U_{IPn\_Luft}$ est établie lors d'une mesure d'étalonnage avec l'élément capteur à l'air, et dans lequel une tension de Nernst $U_{IPN\_Abg}$ est établie lors d'une mesure en fonctionnement de gaz d'échappement et dans lequel, en tant que valeur de comparaison, $\sigma_{02\_2}$ est calculée à une température $T_{IP}$ de la cellule de pompage selon

$$\sigma_{O2\_2} = e^{\left(U_{IPn\_Abg} - U_{IPn\_Luft}\right) \cdot \frac{4.F}{R.T_{IP}}} \cdot 20,95 [Vol. -\%]$$

**9.** Procédé selon l'une des revendications précédentes, dans lequel, périodiquement, la tension de référence $U_{REF}$ est modifiée et la variation résultante de la tension de cellule de pompage $\Delta U_{IP}$ et de la tension de cellule de mesure $\Delta U_{VS}$ est détectée.

**10.** Procédé selon l'une des revendications précédentes, dans lequel, périodiquement, le courant $I_{CP}$ à travers la cellule de mesure est modifié d'une valeur $\Delta I_{CP}$ et la variation résultante de la tension de cellule de pompage $\Delta U_{IP}$ est détectée.

**11.** Procédé selon l'une des revendications précédentes, dans lequel la tension de référence $U_{REF}$ est ajustée à une valeur de $U_{REF} < 0,45$ V, en particulier $U_{REF} < 0,35$ V, afin d'accroître la pression partielle d'oxygène dans la chambre de mesure.

**12.** Procédé selon l'une des revendications précédentes, le procédé étant mis en œuvre à des coefficients d'air dans le courant de gaz d'échappement de $\lambda > 1,01$, en particulier à $\lambda > 1,1$.

**13.** Procédé selon l'une des revendications précédentes, dans lequel la température de la cellule de pompage $T_{IP}$ est calculé directement après un étalonnage à l'air et pendant le fonctionnement de brûleur subséquent ou directement après la fin d'un fonctionnement de brûleur et pendant l'étalonnage subséquent à l'air selon

$$T_{IP} = \frac{4.F}{R} \cdot \frac{(U_{IPn\_Abg} - U_{IPn\_Luft})}{1n\left(\frac{I_P}{I_{P\_Luft}}\right)}$$

Fig. 1

Fig. 2

Fig. 3

EP 3 064 937 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006014892
- DE 102009052158 A1
- DE 102013202260 A1
- EP 1460418 A1
- US 2005061667 A1
- DE 102011089383 A1
- DE 69802340 T2
- DE 3115404 A1